# EUROPEAN PATENT APPLICATION

(11) **EP 4 676 113 A1**
(43) Date of publication of application: **07.01.2026**
(21) Application number: 23935084.6
(22) Date of filing: 29.11.2023
(51) Int. Cl.: H04W 24/08

(54) **METHOD AND APPARATUS FOR ACQUIRING ROAD TEST GPS DATA**

(30) Priority: 27.04.2023 CN 202310481024
(71) Applicant: ZTE CORPORATION, Shenzhen, Guangdong 518057 (CN)
(72) Inventor: LI, Yongqing, Shenzhen, Guangdong 518057 (CN)
(74) Representative: Ziebig Hengelhaupt Intellectual Property Attorneys Patentanwaltskanzlei PartGmbB
(86) International application number: PCT/CN2023/135169
(87) International publication number: WO 2024/221917

(57) **Abstract**

The present application belongs to the field of road test GPS data communications. Disclosed are a method and apparatus for acquiring road test GPS data. The method comprises: a drive test device establishing a communication connection with a mobile device; the road test device sending a global positioning system (GPS) data request to the mobile device by means of the communication connection; and the road test device acquiring GPS data sent by the mobile device by means of the communication connection.

## Description

### CROSS-REFERENCE TO RELATED APPLICATIONS

The present application claims priority to Chinese Application No. 202310481024.2, filed with the Chinese Patent Office on April 27, 2023, with the title "METHOD AND APPARATUS FOR ACQUIRING ROAD TEST GPS DATA", the disclosure of which is hereby incorporated by reference in its entirety.

### TECHNICAL FIELD

The present application relates to the field of road test communication, and in particular to method and apparatus for acquiring road test GPS data.

### BACKGROUND

Currently, Global Positioning System (GPS) positioning information is crucial when using network optimization tools for road testing. Computers are becoming increasingly convenient, but they offer fewer Universal Serial Bus (USB) interfaces. A mobile terminal for road testing connects to a computer road test software via a USB interface. If USB interfaces are insufficient, the GPS device needs to be connected to the PC road test software using a hub.

However, using an external GPS device is expensive and has the problem of unstable connections.

### SUMMARY

In a first aspect, the embodiment of the present application provides a method for acquiring road test GPS data, comprising: establishing a communication connection between a road test device and a mobile device; sending, by the road test device, a Global Positioning System (GPS) data request to the mobile device via the communication connection; and acquiring, by the road test device, GPS data sent by the mobile device via the communication connection.

In a second aspect, the embodiment of the present application provides a method for acquiring road test GPS data, comprising: establishing a communication connection between a mobile device and a road test device; receiving, by the mobile device, a GPS data request sent by the road test device via the communication connection; acquiring GPS data according to the GPS data request; and sending, the GPS data to the road test device via the communication connection.

In a third aspect, the embodiment of the present application provides an apparatus for acquiring road test GPS data, comprising: a first connection module, for establishing a communication connection with a mobile device; a first sending module, for sending a Global Positioning System (GPS) data request to the mobile device via the communication connection; and a first acquisition module, for acquiring GPS data sent by the mobile device via the communication connection.

In a fourth aspect, the embodiment of the present application provides an apparatus for acquiring road test GPS data, comprising: a second connection module, for establishing a communication connection with a road test device; a receiving module, for receiving a GPS data request sent by the road test device via the communication connection; a second acquisition module, for acquiring GPS data according to the GPS data request; and a second sending module, for sending the GPS data to the road test device via the communication connection.

In a fifth aspect, the embodiment of the present application provides an electronic device, comprising a processor, a memory, and a program or instruction stored in the memory and executable on the processor, the program or instruction, when executed by the processor, implements the steps of the method for acquiring road test GPS data as described in the first aspect or the second aspect.

In a sixth aspect, the embodiment of the present application provides a readable storage medium, having a program or instruction stored theron, the program or instruction, when executed by the processor, implements the steps of the method for acquiring road test GPS data as described in the first aspect or the second aspect.

In a seventh aspect, the embodiment of the present application provides a chip, which comprises a processor and a communication interface, wherein the communication interface and the processor are coupled, and the processor is configured to run a program or instruction to implement the method for acquiring road test GPS data as described in the first aspect or the second aspect.

### BRIEF DESCRIPTION OF DRAWINGS

Fig. 1 is a flow chart of a method for acquiring road test GPS data, provided in an embodiment of the present application;
Fig. 2 is a schematic diagram of implementing communication between a road test software and a mobile terminal APP, provided in an embodiment of the present application;
Fig. 3 is a flow chart of a method for acquiring road test GPS data, provided in an embodiment of the present application;
Fig. 4 is a flow chart of communicating between a PC terminal road test software and a mobile terminal App and acquiring GPS data, provided in an embodiment of the present application;
Fig. 5 is a schematic diagram of the structure of an apparatus for acquiring road test GPS data, provided in an embodiment of the present application;
Fig. 6 is a schematic diagram of the structure of an apparatus for acquiring road test GPS data, provided in an embodiment of the present application;
Fig. 7 is a schematic diagram of the structure of an apparatus for acquiring road test GPS data, provided in an embodiment of the present application; and
Fig. 8 is a schematic diagram of an electronic device according to an embodiment of the present application.

### DETAILED DESCRIPTION

The technical solutions in the embodiments of the present application will be described clearly below in conjunction with the drawings in the embodiments of the present application. Obviously, the described embodiments are part of the embodiments of the present application, not all of them. Based on the embodiments in the present application, all other embodiments obtained by those skilled in the art belong to the protection scope of the present application.

The terms "first", "second", etc. in the specification and claims of the present application are used to distinguish similar objects, and are not used to describe a specific order or sequence. It should be understood that data used in this way can be interchangeable where appropriate, so that the embodiments of the present application can be implemented in an order other than those illustrated or described here, and the objects distinguished by "first", "second", etc. are generally of one type, and the number of objects is not limited. For example, the first object can be one or more. In addition, "and/or" in the specification and claims represents at least one of the connected objects, and the character "/" generally indicates that the objects associated with each other are in an "or" relationship.

The method and apparatus for acquiring road test GPS data provided by embodiments of the present application will be described in detail below with reference to the accompanying drawings through specific embodiments and their application scenarios.

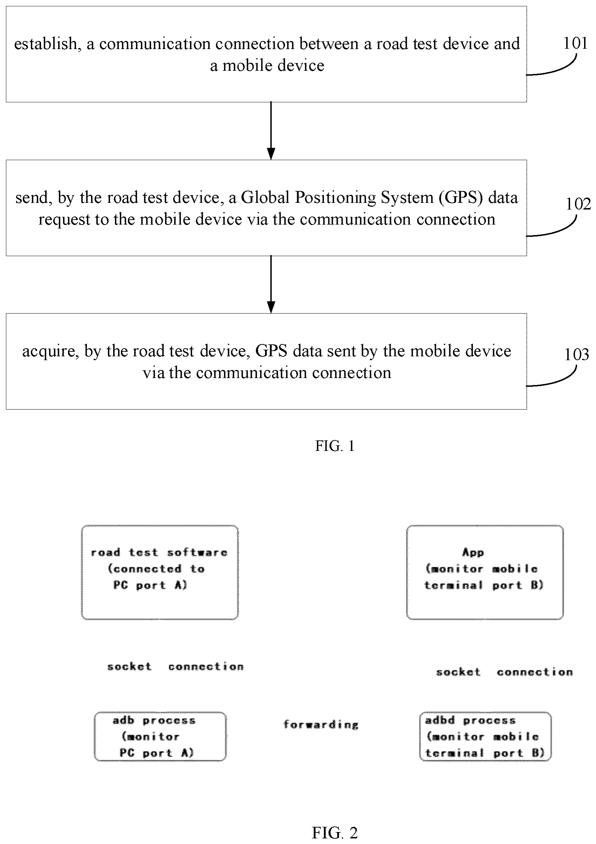

Fig. 1 is a flow chart of the method for acquiring road test GPS data, provided in an embodiment of the present application. The method may be executed by an electronic device, which may comprise a terminal device, such as a computer terminal. In other words, the method may be executed by software or hardware installed on the terminal device, and comprises the following steps:
Step 101: a communication connection is established between a road test device and a mobile device;

In an embodiment of the present application, the communication connection can be a wireless communication connection or a wired communication connection. For example, a connection can be established between the road test device and the mobile device via USB. For another example, a wireless communication connection can be established between the road test device and the mobile device via short-range communication such as WiFi and Bluetooth.

In an embodiment, the road test device can send an Android Debug Bridge (adb) command to a mobile device, informing the mobile device of the address information to use for establishing a communication connection, and establish the communication connection by monitoring the corresponding address information.

For example, the road test device can be a personal computer (PC). The road test device can communicate with the mobile device via locally installed road test software (i.e., an application), and the mobile device can communicate with the road test device via a locally installed application. As shown in Fig. 2, when the road test device and the mobile device establish a wireless communication connection via a USB interface or Wireless Fidelity (Wi-Fi), the road test software (i.e., the application installed on the road test device) can use the adb forward command (adb includes adbd) to notify the mobile device's APP to set port B, and redirects port A of the road test device and port B of the mobile device via the adb forward command (i.e., adb forward tcp: PC port A tcp: mobile device port B), and then sends a connection request to the mobile device to establish a communication connection with the mobile device.

In an embodiment, an application on the mobile device for communicating with the road test device may be in an inactive state. Therefore, before establishing a communication connection with the mobile device, the method may further comprising: sending, by the road test device, a first command to the mobile device, wherein the first command instructs the mobile device to start an application for interacting with the road test device. For example, the mobile device may be connected to the road test device via a USB, and the road test device sends the first command to the mobile device via the USB to start an application on the mobile device that interacts with the road test device, wherein the first command may be an adb command.

For example, a possible process for establishing a communication connection includes the following steps: firstly, the road test software sends the first adb command (i.e. the first command mentioned above) to the application (APP) of the mobile terminal (i.e. the mobile device), which is used to start the mobile terminal APP. At this time, the format of the first adb command to start the application can be: adb shell am start -- activity-single-top +App package name; After the mobile terminal APP is started, it receives the second adb command (which can be referred to as the second command) sent by the road test software, the second adb command is used to notify the mobile terminal APP to set the port number (mobile terminal port B). At this time, the format of the second adb command to set the port number can be: adb shell am broadcast - a + package name. setport -- ei port + mobile port number; After receiving the command, the mobile terminal APP creates a server socket and monitors the client terminal socket connection requests. When the mobile terminal APP receives the third adb command (which can be referred to as the third command), PC port A and mobile terminal port B redirect. At this time, the format of the third adb command can be: adb forward tcp: PC port A tcp: mobile port B; After PC port A and mobile terminal port B complete the redirection, the road test software creates a socket and sends the socket connection request to the mobile terminal APP. After the mobile terminal APP monitors the connection request, it receives the connection request, thereby achieving the communication connection between the road test software and the mobile terminal APP.

The above communication connection process is only one possible implementation in this application, and in specific applications, it is not limited to the establishment process of the above communication connection. For example, for road testing, the Bluetooth physical address of the mobile device can be obtained via Bluetooth module scanning, and a Bluetooth connection request is sent to the mobile device via this Bluetooth physical address, thereby establishing a Bluetooth connection with the mobile device.

Step 102: a Global Positioning System (GPS) data request is sent, by the road test device, to the mobile device via the communication connection.

In an embodiment, the road test device sends a GPS data request to the mobile device via the communication connection. For example, in the implementation shown in Fig. 2, the road test device sends a GPS data request to the mobile device via port A, wherein the GPS data request may be a request encapsulated according to a custom protocol.

For example, the GPS data request is encapsulated according to a custom protocol, including: using the code field as an identification command, consisting of four characters "0000", where the first two characters represent the direction in which the command is sent. When the first two characters are 00, it represents that the road test device sends command to the mobile device; when the first two characters are 01, it represents that the mobile device sends command to the road test device; the last two characters 00 represent the GPS service. Of course, this is not specifically limited in the embodiment of the present application.

Step 103: the GPS data sent by the mobile device via the communication connection is acquired by the road test device.

In an embodiment, the road test device receives encapsulated data sent by the mobile device via the communication connection, parses the encapsulated data according to a preset format, to obtain the GPS data. Thus, the GPS built into the mobile device is utilized to conveniently acquire the GPS data required for the road test without the need to add an additional interface for acquiring GPS data, thereby achieving the effects of saving resources, reducing costs, and reducing dependence on an external GPS.

In an achievable manner, the encapsulated data sent by the mobile device via the communication connection may be data encapsulated according to a custom protocol. For example, the mobile device may encapsulate GPS data in the following manner:

```
     {
     "code" : "0100",
     "data" {
         "lon" : double
         "lat" : double
         "alt" : double
         "speed" : double
         "scount" : int
         }
     }
```

The code field is an identification command, consisting of four characters "0000". The first two characters 01 represent that the mobile device sends data to the road test device, and the last two characters 00 represent GPS service. Specifically, data field identifies the data content; lon field identifies longitude; lat field identifies latitude; alt field identifies altitude; speed field identifies speed; and scount field identifies the number of satellites.

After receiving the encapsulated data, the road test device can parse the encapsulated data according to the above-mentioned preset format, parse the lon field, lat field, alt field, speed field and scount field, thereby obtaining GPS data including longitude, latitude, altitude, speed and number of satellites. Of course, this is not specifically limited in the embodiment of the present application, and the specific GPS data can be determined according to actual conditions.

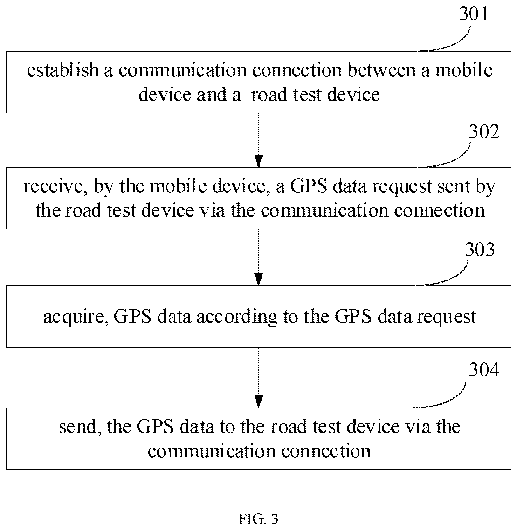

Fig. 3 is a flow chart of a method for acquiring road test GPS data, provided in an embodiment of the present application. The method may be executed by the mobile device, which may comprise a terminal device, such as a mobile phone. In other words, the method may be executed by software or hardware installed on the mobile device, and comprises the following steps:
Step 301: a communication connection is established between a mobile device and a road test device.

In the embodiment of the present application, the mobile device and the road test device establish a communication connection, which corresponds to the road test device and the mobile device establishing a communication connection in the method shown in Fig. 1. For details, please refer to the above related description.

Step 302: a GPS data request sent by the road test device via the communication connection is received by the mobile device.

In the embodiment of the present application, the mobile device receives the GPS data request sent by the road test device via the communication connection. The manner in which the road test device sends the GPS data request can refer to the related description of the method described in Fig. 1 above.

Step 303: the GPS data is acquired according to the GPS data request.

In this embodiment of the present application, a mobile device receives the GPS data request sent by the road test device and, based on the GPS data request, acquires GPS data.

For example, Android positioning has the following advantages:
- High positioning success rate: The overall positioning success rate is as high as 99.6%.
- High positioning accuracy: GPS positioning accuracy reaches 10 meters (depending on the chip).
- Fast speed: Positioning speed reaches milliseconds.
- Stable service: Positioning service stability can reach 99.999%.
- Low power consumption: Memory usage is 15.6MB, CPU usage is 2.2%.

Therefore, after receiving the GPS data request, the mobile device can start Android positioning to acquire GPS data.

In a possible implementation, the mobile device may periodically acquire the GPS data according to a preset time interval. For example, the frequency of acquiring GPS data may be set to 1 second, with the mobile device sending the currently acquired GPS data to the road test device every second.

In a possible implementation, to prevent the mobile device from performing unnecessary GPS data acquisition, the mobile device may stop acquiring GPS data upon receiving a stop command broadcast by the road test device. For example, the road test device may send an adb command instructing the mobile device to stop acquiring GPS data. The format of the adb command to stop acquiring GPS data may be: adb shell am broadcast - a + package name.ACTION_GPS_STOP.

Optionally, the GPS data described in the embodiment of the present application can be obtained by the mobile device from calling the native system application interface, or it can be obtained by the mobile device from a third-party application interface. Of course, this is not specifically limited in the embodiment of the present application.

Step 304: the GPS data is sent to the road test device via the communication connection.

In an embodiment of the present application, the mobile device can encapsulate the GPS data according to a preset format and transmit the encapsulated GPS data to the road test device via the communication connection. This utilizes the mobile device's built-in GPS, greatly facilitating road testing and resolving the issue of unstable external GPS connections, and achieving the effects of saving resources, reducing costs, and reducing dependence on external GPS.

The mobile device can encapsulate the GPS data using the method described in Fig. 1. For details, please refer to the relevant description above.

The following describes the technical solutions provided by the embodiments of this application, using PC terminal road test software and a mobile terminal APP as examples.

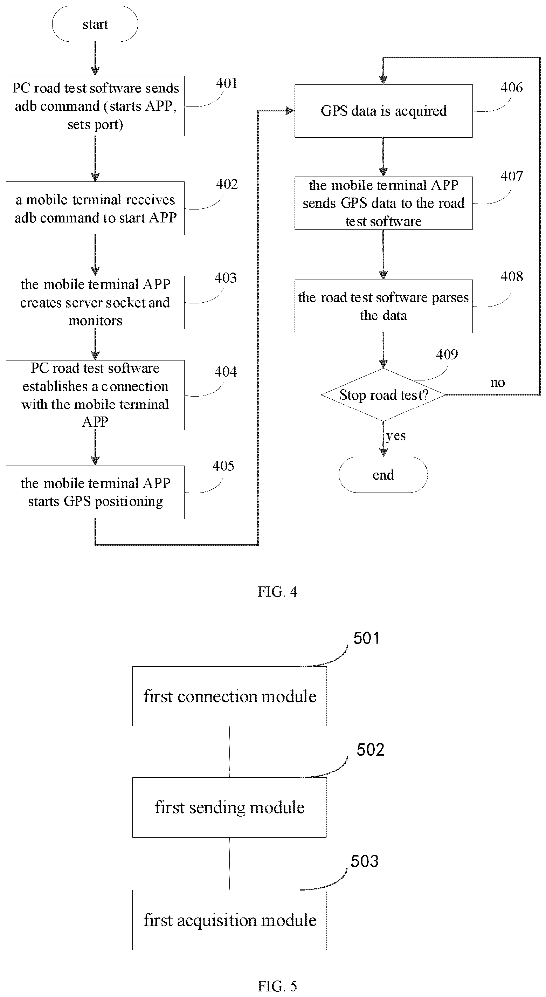

Fig. 4 is another flow chart of a method for acquiring road test GPS data, provided in an embodiment of the present application. As shown in Fig. 4, the method may comprise the following steps:
Step 401: PC terminal road test software sends an adb command, wherein the adb command may comprise a command to start the mobile terminal APP and a command to set the port.

For example, the road test software sends the first adb command to start the mobile terminal APP. The adb command format may be: adb shell am start --activity-single-top + App package name. The second adb command is sent to notify the mobile terminal APP to set the port number.

Step 402: the mobile terminal APP receives the adb command to start the APP.

Step 403: the mobile terminal APP creates a server socket and monitors.

For example, after receiving the second adb command, the mobile terminal APP sets the server socket port number, creates the server socket, and then starts the server socket to monitor the client terminal connection requests initiated by the road test software. The format of the second adb command for setting the port number can be: adb shell am broadcast -a + package name.setport --ei port + mobile terminal port number.

Step 404: the PC terminal road test software establishes a communication connection with the mobile terminal APP.

For example, the PC terminal road test software can send a third adb command to the mobile terminal APP. After receiving the third adb command sent by the PC terminal road test software, the mobile terminal APP completes the redirection between the mobile terminal APP port and the PC terminal road test software port via the third adb command. Then the mobile terminal APP monitors the client terminal connection request initiated by the road test software via the server socket, and establishes a socket connection with the client terminal socket created by the PC terminal road test software via the server socket. The format of the third adb command can be: adb forward tcp: PC port A tcp: mobile terminal port B.

Step 405: the mobile terminal APP starts GPS positioning function.

For example, after the mobile terminal APP establishes a communication connection with the PC terminal road test software, the mobile terminal APP receives a GPS data request sent by the PC terminal road test software and starts the GPS positioning function. The communication connection may be via USB or other short-range communication connection methods.

The mobile terminal APP may use the Android system to start the GPS positioning function. Of course, this is not specifically limited in this embodiment of the present application; the mobile terminal APP may also use other methods for GPS positioning.

Step 406: the mobile terminal APP acquires GPS data.

For example, the mobile terminal APP acquires GPS data by starting the positioning function of the Android system.

Step 407: the mobile terminal APP sends the GPS data to the PC terminal road test software.

For example, the mobile terminal APP sends the GPS data, encapsulated according to a custom protocol, to the PC terminal road test software. The specific format of the custom encapsulation can be found in the description above.

Step 408: the PC terminal road test software parses the GPS data.

For example, the PC terminal road test software parses the GPS data, encapsulated according to the custom protocol, to obtain the parsed GPS data.

Step 409: the mobile terminal APP determines whether a stop command sent by the PC terminal road test software is received. If so, the road test is stopped. Otherwise, the mobile terminal APP returns to Step 406, continues acquiring GPS data at a preset frequency, and sends the acquired GPS data to the road test software.

For example, during the road test, the frequency of acquiring GPS data can be set to 1 second. The mobile device acquires and sends GPS data to the road test device every second. When the mobile terminal APP receives a stop command sent by the PC terminal road test software, it stops acquiring GPS data.

Through the technical solutions provided in the embodiments of this application, when using network optimization tools for road testing, the mobile terminal for road testing is connected to the PC road test software via a USB interface, utilizing the mobile terminal's built-in GPS can facilitate road testing and reduce reliance on an external GPS. The road test software establishes a communication connection with the App, issues commands to acquire GPS data, and then the App, after acquiring the GPS data, feeds back the same to the road test software. Using the mobile terminal's built-in GPS saves resources and reduces costs compared to using an external GPS.

It should be noted that the method for acquiring road test GPS data is provided in the embodiments of the present application, the executing entity can be an apparatus for acquiring road test GPS data or a control module in the apparatus for implementing the method for acquiring road test GPS data. In the embodiments of the present application, the apparatus for acquiring road test GPS data provided by the embodiments of this application is described by taking the apparatus for acquiring road test GPS data executing the method for acquiring road test GPS data as an example.

Fig. 5 is a schematic diagram of the structure of an apparatus for acquiring road test GPS data, provided in the embodiment of the present application. As shown in Fig. 5, the apparatus for acquiring road test GPS data mainly comprises: a first connection module 501, a first sending module 502 and a first acquisition module 503. The first connection module 501 is for establishing a communication connection with a mobile device; the first sending module 502 is for sending a Global Positioning System (GPS) data request to the mobile device via the communication connection; the first acquisition module 503 is for acquiring the GPS data sent by the mobile device via the communication connection.

In an embodiment, the first acquisition module 503 acquires the GPS data sent by the mobile device via the communication connection, comprising: receiving the encapsulated data sent by the mobile device via the communication connection; parsing the encapsulated data according to a preset format to obtain the GPS data.

In an embodiment, the communication connection comprises a wireless communication connection.

In an embodiment, the first sending module 502 is further configured to: send a first command to the mobile device via the wired communication connection, wherein the first command instructs the mobile device to start an application for interacting with the road test device.

The above-mentioned apparatus for acquiring the road test GPS data provided in the embodiment of the present application can implement each process implemented by the road test device in the method embodiments of Figs. 1 to 4, and will not be described again here to avoid repetition.

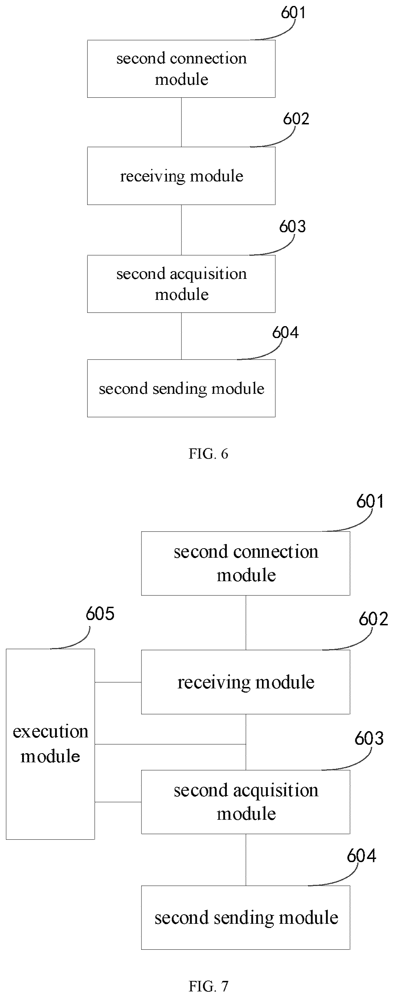

Fig. 6 is a schematic diagram of the structure of an apparatus for acquiring road test GPS data, provided in an embodiment of the present application. As shown in Fig. 6, the apparatus for acquiring road test GPS data comprises: a second connection module 601, a receiving module 602, a second acquisition module 603 and a second sending module 604. The second connection module 601 is for establishing a communication connection with a road test device; the receiving module 602 is for receiving a GPS data request sent by the road test device via the communication connection; the second acquisition module 603 is for acquiring GPS data according to the GPS data request; the second sending module 604 is for sending the GPS data to the road test device via the communication connection.

In an embodiment, the second sending module 604 sending the GPS data to the road test device, comprises: encapsulating the GPS data according to a preset format; and sending the encapsulated GPS data.

In an embodiment, the second acquisition module 603 acquiring the GPS data, comprises: periodically acquiring the GPS data according to a preset time interval.

In an embodiment, the receiving module 602 is further configured to receive a stop command broadcast by the road test device. As shown in Fig. 7, the apparatus may further comprise an execution module 605, configured to instruct the second acquisition module 603 to stop acquiring the GPS data.

The apparatus for acquiring road test GPS data in the embodiments of the present application can be an apparatus, or a component, integrated circuit, or chip in a terminal. The apparatus can be a mobile electronic device or a non-mobile electronic device. Exemplary mobile electronic devices include mobile phones, tablet computers, laptop computers, Palmtop Computer, in-vehicle electronic devices, wearable devices, ultra-mobile personal computers (UMPCs), netbooks, or personal digital assistants (PDAs), while non-mobile electronic devices include servers, Network Attached Storage (NAS), personal computer (PC), and the like, and is not specifically limited in this embodiment.

The apparatus for acquiring road test GPS data in the embodiments of this application can be an apparatus with an operating system. This operating system can be Android, iOS, or any other operating system, and is not specifically limited in this embodiment.

The apparatus for acquiring road test GPS data provided in the embodiments of this application can implement the various processes performed by the mobile device in the method embodiments of Figs. 1 to 4. To avoid repetition, these processes are not described here.

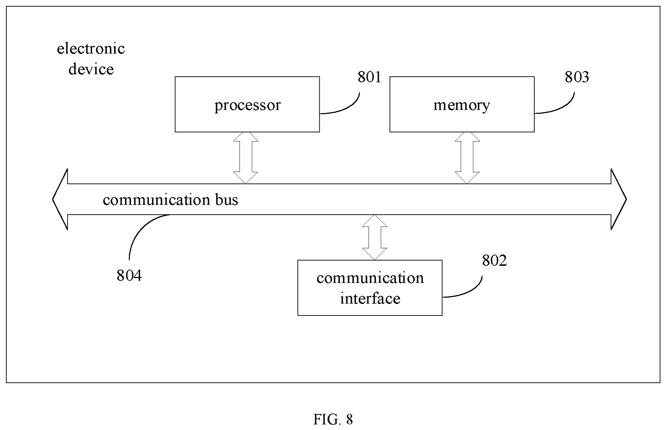

Based on the same technical concept, an embodiment of the present application also provides an electronic device, which is used to execute the above-mentioned method for acquiring road test GPS data. Fig. 8 is a structural diagram of an electronic device that implements various embodiments of the present application. The electronic device may have relatively large differences due to different configurations or performances, and may include a processor 801, a communication interface 802, a memory 803 and a communication bus 804, wherein the processor 801, the communication interface 802, and the memory 803 communicate with each other via the communication bus 804. The processor 801 can call a computer program stored in the memory 803 and runnable on the processor 801. The specific execution steps can refer to the various steps of the above-mentioned embodiments of the method for acquiring the road test GPS data, and can achieve the same technical effect. To avoid repetition, they will not be repeated here.

It should be noted that the electronic devices in the embodiments of the present application include: servers, terminals, or other devices other than the terminals.

The above electronic device structure does not constitute a limitation on the electronic device. The electronic device may include more or fewer components than shown, or a combination of certain components, or a different component arrangement. For example, the input unit may include a graphics processing unit (GPU) and a microphone, and the display unit may be configured as a display panel in the form of a liquid crystal display, organic light-emitting diode, or the like. The user input unit includes at least one of a touch panel and other input devices. A touch panel is also called a touch screen. Other input devices may include, but are not limited to, a physical keyboard, function keys (such as volume control buttons, on/off buttons, etc.), a trackball, a mouse, and a joystick, which are not detailed here.

The memory can be used to store software programs and various data. The memory may mainly include a first storage area for storing programs or instructions and a second storage area for storing data. The first storage area may store an operating system, applications or instructions required for at least one function (such as a sound playback function, an image playback function, etc.). In addition, the memory may include volatile memory or non-volatile memory, or the memory may include both volatile and non-volatile memory. The non-volatile memory may be a read-only memory (ROM), a programmable ROM (PROM), an erasable PROM (EPROM), an electrically EPROM (EEPROM), or a flash memory. The volatile memory can be random access memory (RAM), static RAM (SRAM), dynamic RAM (DRAM), synchronous DRAM (SDRAM), double data rate SDRAM (DDRSDRAM), enhanced SDRAM (ESDRAM), Synch link DRAM (SLDRAM) and Direct Rambus RAM (DRRAM).

The processor may include one or more processing units. Optionally, the processor integrates an application processor and a modem processor. The application processor primarily handles operations related to the operating system, user interface, and application programs, while the modem processor primarily processes wireless communication signals, such as a baseband processor. It is understood that the modem processor may not be integrated into the processor.

The embodiment of the present application also provides a readable storage medium having a program or instructions stored thereon. When executed by the processor, this program or instructions implements the various processes of the above-mentioned embodiment of the method for acquiring road test GPS data, achieving the same technical effects. To avoid repetition, these are not described here.

The processor is the processor in the electronic device described in the above embodiments. The readable storage medium includes a computer-readable storage medium, such as a computer read-only memory (ROM), random access memory (RAM), a magnetic disk, or an optical disk.

The embodiment of the present application further provides a chip comprising a processor and a communication interface, wherein the communication interface is coupled to the processor. The processor is configured to execute a program or instructions to implement the various processes of the above-described embodiments of the method for acquiring road test GPS data, achieving the same technical effects. To avoid repetition, these processes are not described here.

It should be understood that the chip described in the embodiments of the present application may also be referred to as a system-level-chip, system chip, chip system, or system-on-chip.

It should be noted that, the terms "include", "comprises" or any other variants thereof herein are intended to cover non-exclusive inclusion, so that a process, method, article or apparatus including a series of elements includes not only those elements, but also other elements not explicitly listed, or also includes elements inherent to such process, method, article or apparatus. In the absence of further restrictions, an element defined by the sentence "comprising a ..." does not exclude the presence of other identical elements in the process, method, article or apparatus comprising the element. In addition, it should be noted that the scope of the method and apparatus in the embodiments of the present application is not limited to performing functions in the order shown or discussed, and may also include performing functions in a substantially simultaneous manner or in a reverse order according to the functions involved. For example, the described method may be performed in an order different from that described, and various steps may be added, omitted, or combined. In addition, the features described with reference to certain examples may be combined in other examples.

Through the description of the above implementations, those skilled in the art can clearly understand that the above-mentioned embodiment methods can be implemented by means of software and a necessary general hardware platform, and of course by hardware, but in many cases the former is a better implementation way. Based on such an understanding, the technical solution of the present application, or the part that contributes to the prior art, can be embodied in the form of a computer software product, which is stored in a storage medium (such as ROM/RAM, a magnetic disk, or an optical disk), and includes a number of instructions for enabling a terminal (which can be a mobile phone, a computer, a server, an air conditioner, or a network device, etc.) to execute the methods described in each embodiment of the present application.

The embodiments of the present application are described above in conjunction with the accompanying drawings, but the present application is not limited to the above-mentioned specific implementation. The above-mentioned specific implementations are merely illustrative and not restrictive. Under the guidance of the present application, those skilled in the art can also make many forms without departing from the purpose of the present application and the scope of protection of the claims, all of which are within the protection of the present application.

## Claims

1. A method for acquiring road test GPS data, comprising:
establishing a communication connection between a road test device and a mobile device;
sending, by the road test device, a Global Positioning System (GPS) data request to the mobile device via the communication connection;
acquiring, by the road test device, GPS data sent by the mobile device via the communication connection.

2. The method according to claim 1, wherein acquiring, by the road test device, GPS data sent by the mobile device via the communication connection, comprising:
receiving, encapsulated data sent by the mobile device via the communication connection;
parsing, the encapsulated data according to a preset format to obtain the GPS data.

3. The method according to claim 1, further comprising:
receiving, by the road test device, wireless parameter indicator sent by the mobile device via a wired communication connection.

4. The method according to any one of claims 1 to 3, wherein the communication connection comprises a wireless communication connection.

5. The method according to claim 4, wherein before establishing a communication connection between a road test device and a mobile device, the method further comprising:
sending, by the road test device, a first command to the mobile device, wherein the first command instructs the mobile device to start an application for interacting with the road test device.

6. A method for acquiring road test GPS data, comprising:
establishing, a communication connection between a mobile device and a road test device;
receiving, by the mobile device, a GPS data request sent by the road test device via the communication connection;
acquiring, GPS data according to the GPS data request;
sending, the GPS data to the road test device via the communication connection.

7. The method according to claim 6, wherein sending, the GPS data to the road test device, comprising:
encapsulating, the GPS data according to a preset format; and
sending, the encapsulated GPS data.

8. The method according to claim 6 or 7, wherein acquiring, GPS data according to the GPS data request, comprising:
periodically acquiring, by the mobile device, the GPS data according to preset time interval.

9. The method according to claim 8, further comprising:
stop acquiring the GPS data upon receiving a stop command broadcast by the road test device.

10. An apparatus for acquiring road test GPS data, comprising:
a first connection module, for establishing a communication connection with a mobile device;
a first sending module, for sending a Global Positioning System (GPS) data request to the mobile device via the communication connection;
a first acquisition module, for acquiring GPS data sent by the mobile device via the communication connection.

11. An apparatus for acquiring road test GPS data, comprising:
a second connection module, for establishing a communication connection with a road test device;
a receiving module, for receiving a GPS data request sent by the road test device via the communication connection;
a second acquisition module, for acquiring GPS data according to the GPS data request;
a second sending module, for sending the GPS data to the road test device via the communication connection.

12. An electronic device, comprising a processor, a memory, and a program or instruction stored in the memory and executable on the processor, the program or instruction, when executed by the processor, implements the steps of the method according to any one of claims 1 to 5, or the steps of the method according to any one of claims 6 to 9.

13. A computer-readable storage medium, having a program or instruction stored thereon, the program or instruction, when executed by a processor, implements the steps of the method according to any one of claims 1 to 5, or the steps of the method according to any one of claims 6 to 9.
